# EUROPÄISCHE PATENTANMELDUNG

(11) **EP 2 727 777 A1**
(43) Veröffentlichungstag der Anmeldung: **07.05.2014**
(21) Anmeldenummer: 13183851.8
(22) Anmeldetag: 11.09.2013
(51) Int. Cl.: B60R 21/264

(54) **Vorrichtung zum Öffnen eines Gasdruckbehälters, Kaltgasgenerator und Verfahren zum Herstellen eines Kaltgasgenerators**

(30) Priorität: 05.11.2012 DE 102012220061
(71) Anmelder: ROBERT BOSCH GMBH, 70442 Stuttgart (DE)
(72) Erfinder: Iben, Uwe, 70839 Gerlingen (DE); Nitschke, Werner, 71679 Asperg (DE)

(57) **Zusammenfassung**

Die Erfindung betrifft eine Vorrichtung (104) zum Öffnen eines Gasdruckbehälters (102), wobei die Vorrichtung (104) eine Berstscheibe (108) und eine Sprengladung (110) aufweist. Die Berstscheibe (108) ist dazu ausgebildet, den Gasdruckbehälter (102) gasdicht zu verschließen. Die Sprengladung (110) ist dazu ausgebildet, die der Berstscheibe (108), ansprechend auf einen Zündimpuls zu zerstören. Die Sprengladung (110) ist in direktem Kontakt zu einer Oberfläche der Berstscheibe (108) angeordnet.

## Beschreibung

### Stand der Technik

Die vorliegende Erfindung bezieht sich auf eine Vorrichtung zum Öffnen eines Gasdruckbehälters, auf einen Kaltgasgenerator sowie auf ein Verfahren zum Herstellen eines Kaltgasgenerators.

In modernen Fahrzeugen werden zunehmend Kaltgasgeneratoren zum Aufblasen von Personensicherheitsmitteln wie Airbags verwendet, um eine Explosion einer großen Menge von Sprengmittel mit einem lauten Geräusch und eine große Menge von heißem Gas im Bereich eines Fahrzeuginsassen zu vermeiden, um eine Gefährdung des Fahrzeuginsassen zu reduzieren.

Die DE 10 2004 009 300 A1 beschreibt eine Insassenschutzvorrichtung.

### Offenbarung der Erfindung

Vor diesem Hintergrund wird mit der vorliegenden Erfindung eine Vorrichtung zum Öffnen eines Gasdruckbehälters, ein Kaltgasgenerator sowie ein Verfahren zum Herstellen eines Kaltgasgenerators gemäß den Hauptansprüchen vorgestellt. Vorteilhafte Ausgestaltungen ergeben sich aus den jeweiligen Unteransprüchen und der nachfolgenden Beschreibung.

Eine Explosion kann umso stärker auf einen Gegenstand über Druck und Temperatur wirken, je geringer der Abstand der Explosion von dem Gegenstand ist. Je stärker die Wirkung der Explosion ist, umso kleiner kann die Gesamtenergie der Explosion sein, um die gleiche Wirkung zu erzielen. Vorteilhafterweise kann die Explosion unmittelbar auf dem Gegenstand erfolgen, um den Gegenstand mit der minimalen Menge Sprengstoff sicher zu zerstören.

Es wird eine Vorrichtung zum Öffnen eines Gasdruckbehälters vorgestellt, wobei die Vorrichtung die folgenden Merkmale aufweist:
eine Berstscheibe zum gasdichten Verschließen des Gasdruckbehälters; und
eine Sprengladung zum Zerstören der Berstscheibe, ansprechend auf einen Zündimpuls, wobei die Sprengladung in direktem Kontakt zu einer Oberfläche der Berstscheibe angeordnet ist.

Ferner wird ein Kaltgasgenerator mit folgenden Merkmalen vorgestellt:
einem Gasdruckbehälter, der in einem betriebsbereiten Zustand mit einem komprimierten Kaltgas gefüllt ist; und
einer Vorrichtung zum Öffnen des Gasdruckbehälters gemäß dem hier vorgestellten Ansatz, wobei die Berstscheibe in dem betriebsbereiten Zustand des Kaltgasgenerators eine Austrittsöffnung des Gasdruckbehälters gasdicht verschließt.

Weiterhin wird ein Verfahren zum Herstellen eines Kaltgasgenerators vorgestellt, das die folgenden Schritte aufweist:
Befüllen eines Gasdruckbehälters mit einem komprimierten Kaltgas; und
Verschließen einer Austrittsöffnung des Gasdruckbehälters mit einer Vorrichtung zum Öffnen gemäß dem hier vorgestellten Ansatz.

Unter einem Gasdruckbehälter kann ein druckfester Behälter verstanden werden, der dazu ausgebildet ist, ein komprimiertes Gas zu bevorraten. Das Gas kann als Kaltgas bezeichnet werden, da das Gas beim Ausströmen eine Temperatur kleiner oder gleich einer Umgebungstemperatur aufweist. Im Gegensatz dazu können Verbrennungsgase (beispielsweise wie sie bei einer Explosion von Sprengmitteln entstehen) als Heißgas bezeichnet werden. Der Gasdruckbehälter kann als Druckkartusche bezeichnet werden. Der Gasdruckbehälter kann beispielsweise analog einer Pressluftflasche eine zylindrische Grundform mit gewölbtem Boden und gewölbten Schultern aufweisen. Der Gasdruckbehälter kann auch beispielsweise kugelförmig sein. Der Gasdruckbehälter kann aus einem hoch (Druck-) belastbaren Material angefertigt sein und eine hohe Wandstärke aufweisen. Eine Berstscheibe kann eine Membran sein, die stark genug ist, um den Druck des komprimierten Gases in dem Gasdruckbehälter auszuhalten, solange keine zusätzlichen äußeren Kräfte auf die Berstscheibe wirken. Die Berstscheibe ist dauerhaft gasdicht. Wenn eine größere Kraft als eine vorgesehene Kraft auf die Berstscheibe wirkt, versagt die Berstscheibe und wird damit durchlässig für das Gas. Eine Sprengladung kann eine Menge Sprengstoff sein, die ausreicht, die Berstscheibe in Kombination mit dem Druck in dem Gasdruckbehälter zu zerstören, wenn die Sprengladung gezündet wird. Die Sprengladung kann einen Zünder beinhalten. Der Zünder kann durch einen Zündimpuls aktiviert werden. Die Sprengladung kann einen explosiven Stoff beinhalten. Die Sprengladung kann eine vorbestimmte Form aufweisen, beispielsweise um eine Sprengkraft der Sprengladung lokal zu verstärken oder in eine bevorzugte Richtung zu lenken. Die Sprengladung kann unmittelbar auf der Berstscheibe angeordnet sein. Wenn die Explosion unmittelbar auf der Berstscheibe erfolgt, so ist die Wirkung der Explosion groß. Die Wirkung lässt sich steigern, indem die Kraft der Explosion auf die Berstscheibe gebündelt wird oder die Explosion innerhalb der Berstscheibe erfolgt. Ein Kaltgasgenerator kann Teil einer Energieabsorptionseinrichtung sein. Beispielsweise kann der Kaltgasgenerator Teil eines Airbagsystems sein. Der Kaltgasgenerator kann Gas zum Aufblasen des Airbags bereitstellen, wenn die Berstscheibe durch ein Auslösesignal zerstört wird.

Der Kaltgasgenerator kann ein regelbares Ventil zum Regeln eines Gasstroms durch die Ausströmöffnung während einer Aktivierung des Kaltgasgenerators aufweisen. Das Ventil kann nach der Zündung der Sprengladung den Gasstrom aus dem Gasdruckbehälter regulieren. Dadurch kann beispielsweise der Airbag partiell aufgeblasen werden. Ebenso kann der Airbag stufenweise aufgeblasen werden. Auch eine verlängerte Standzeit des Airbags bei einem vorbestimmten Füllgrad ist beispielsweise durch gepulste Gasstöße aus dem Gasdruckbehälter möglich.

Die Berstscheibe kann mit dem Gasdruckbehälter verschweißt sein. Durch ein Verschweißen kann die Berstscheibe dauerhaft und sicher mit dem Gasdruckbehälter verbunden werden. Das Verschweißen kann beispielsweise mittels Laserschweißen erfolgen. Das Verschweißen kann zum Verschließen des Gasdruckbehälters unmittelbar anschließend an das Befüllen erfolgen.

Die Sprengladung kann an einer Schwachstelle der Berstscheibe angeordnet sein. Eine Schwachstelle kann beispielsweise eine Stelle der Berstscheibe sein, an der in einem Material der Berstscheibe die höchsten Spannungen vorhanden sind, wenn die Berstscheibe unter Druck steht. Beispielsweise kann die Schwachstelle an einer Stelle der Berstscheibe angeordnet sein, die eine Kerbe aufweist. Ebenfalls kann die Schwachstelle an einer Stelle angeordnet sein, an der die Berstscheibe eine geringere Materialstärke aufweist, als an anderen Stellen.

Die Berstscheibe kann zumindest eine Nut aufweisen, wobei die Nut als Sollbruchstelle der Berstscheibe ausgebildet ist. Eine Nut kann eine Rille sein. Die Nut kann eine längliche Vertiefung sein. Wenn die Berstscheibe mehrere Nuten aufweist, können sich die Nuten kreuzen. Durch die Nut kann die Berstscheibe strukturell geschwächt werden, sodass die Berstscheibe an der Nut versagt oder bricht, wenn die Sprengladung gezündet wird. Durch das Einbringen der Nut kann ein Zerstörungsmuster der Berstscheibe vorbestimmt werden, wodurch das Gas aus dem Gasdruckbehälter in einer vorbestimmten Weise aus dem Gasdruckbehälter strömen kann.

Die Vorrichtung kann eine zweite Berstscheibe aufweisen, die so angeordnet ist, dass die Sprengladung zwischen der Berstscheibe und der zweiten Berstscheibe angeordnet ist. Die zweite Berstscheibe kann im Wesentlichen gleich der Berstscheibe sein. Die zweite Berstscheibe kann auf einer von dem Gasdruckbehälter abgewandten Seite der Berstscheibe angeordnet sein. Die zweite Berstscheibe kann von dem Druck in dem Gasdruckbehälter unbeaufschlagt sein. Die zweite Berstscheibe kann beim Herstellen nach der Berstscheibe an dem Gasdruckbehälter angebracht werden. Die Sprengladung kann zwischen den Berstscheiben geschützt angeordnet sein.

Die zweite Berstscheibe kann eine Aufnahme für die Sprengladung aufweisen, z.B. einen Abstandsring. Die zweite Berstscheibe kann beim Herstellen des Kaltgasgenerators mit der Sprengladung in der Aufnahme auf der Berstscheibe angeordnet werden, nachdem der Gasdruckbehälter durch die erste Berstscheibe gasdicht verschlossen worden ist. Durch das nachträgliche Anbringen der Sprengladung kann die Berstscheibe einfach mit dem Gasdruckbehälter verbunden werden. Die Sprengladung kann dann in einem separaten Arbeitsgang und ohne thermische Einflüsse auf der Berstscheibe platziert werden.

Die zweite Berstscheibe kann elektrische Leiterbahnen zum Leiten des Zündimpulses aufweisen. Die zweite Berstscheibe kann Durchkontaktierungen aufweisen, die den Zündimpuls zu der Sprengladung leiten können. Dadurch kann die Sprengladung über frei zugängliche Terminals gezündet werden.

Die Berstscheibe und die zweite Berstscheibe können Nuten aufweisen, wobei die Nuten zueinander ausgerichtet sind, insbesondere wobei die elektrischen Leiterbahnen in den Nuten angeordnet sind oder durch den Abstandsring geführt werden. Zueinander ausgerichtete Nuten können deckungsgleich ausgerichtete Nuten sein, sodass diese Nuten Kanäle ausbilden. In den Kanälen können die elektrischen Leitungen zum Zünden der Sprengladung angeordnet sein. Dadurch kann die Sprengladung mittig auf der Berstscheibe angeordnet sein und leicht von außen zündbar sein, ohne dass durch das Vergießen der Leitungen die Berstscheibe an bestimmten Stellen durch den Verguß der Leitungen geschwächt ist.

Die zweite Berstscheibe kann gegenüber der Berstscheibe vorgespannt sein, um die Sprengladung zwischen der Berstscheibe und der zweiten Berstscheibe einzuklemmen. Beispielsweise kann die zweite Berstscheibe an einem Rand auf die Berstscheibe gedrückt sein. Dadurch kann die zweite Berstscheibe elastisch verformt werden und die Sprengladung kann mit einer Federkraft der zweiten Berstscheibe auf die erste Berstscheibe gedrückt werden. Die zweite Berstscheibe kann auch in entspanntem Zustand eine der Berstscheibe entgegengesetzte Form aufweisen. Bei der Herstellung des Kaltgasgenerators kann die zweite Berstscheibe in die gleiche Form, wie die Berstscheibe gebogen werden.

Die Erfindung wird nachstehend anhand der beigefügten Zeichnungen beispielhaft näher erläutert. Es zeigen:
- Fig. 1: ein Blockschaltbild eines Kaltgasgenerators gemäß einem Ausführungsbeispiel der vorliegenden Erfindung;
- Fig. 2: ein Ablaufdiagramm eines Verfahrens zum Herstellen eines Kaltgasgenerators gemäß einem Ausführungsbeispiel der vorliegenden Erfindung;
- Fig. 3: eine Darstellung eines Kaltgasgenerators gemäß einem Ausführungsbeispiel der vorliegenden Erfindung;
- Fig. 4: eine Darstellung einer Vorrichtung zum Öffnen eines Gasdruckbehälters gemäß einem Ausführungsbeispiel der vorliegenden Erfindung; und
- Fig. 5: eine Darstellung einer Vorrichtung mit zwei Berstscheiben gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

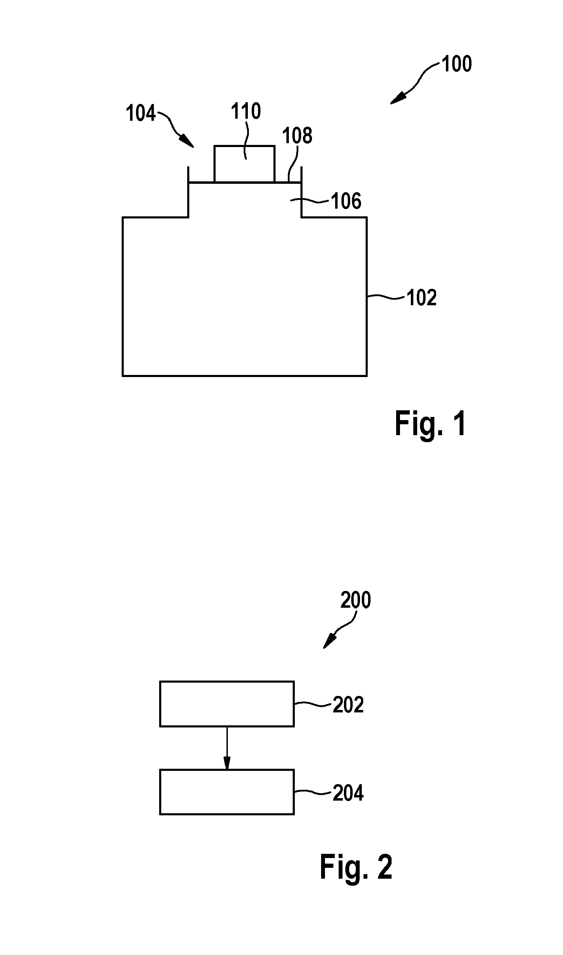

Fig. 1 zeigt ein Blockschaltbild eines Kaltgasgenerators 100 gemäß einem Ausführungsbeispiel der vorliegenden Erfindung. Der Kaltgasgenerator 100 weist einen Gasdruckbehälter 102 und eine Vorrichtung 104 zum Öffnen des Gasdruckbehälters 102 auf. Der Gasdruckbehälter 102 ist druckfest und weist eine Ausströmöffnung 106 auf. Durch die Ausströmöffnung 106 ist der Gasdruckbehälter 102 bei seiner Herstellung mit komprimiertem Kaltgas befüllt worden. Anschließend ist die Ausströmöffnung 106 durch die Vorrichtung 104 gasdicht verschlossen worden. Die Vorrichtung 104 weist eine Berstscheibe 108 und eine Sprengladung 110 zum Zerstören der Berstscheibe 108 auf. Die Berstscheibe 108 ist quer zu der Ausströmöffnung 106 angeordnet und verschließt sie vollständig und gasdicht. Die Berstscheibe 108 ist als Membran ausgebildet und ist so ausgelegt, dass sie einem Druck des Kaltgases widerstehen kann und dauerhaft dicht ist. Die Sprengladung 110 ist direkt auf einer Oberfläche der Berstscheibe 108 angeordnet. Die Sprengladung 110 ist dazu ausgebildet, bei einer Zündung, ansprechend auf einen Zündimpuls, eine Kraft auf die Berstscheibe 108 auszuüben, die in Kombination mit einer Druckkraft durch den Druck in dem Gasdruckbehälter 102 größer ist, als eine Widerstandskraft der Berstscheibe 108. Die Sprengladung 110 ist in diesem Ausführungsbeispiel außen auf der Berstscheibe 108 abgeordnet. Die Sprengladung kann auch in dem Gasdruckbehälter 102 angeordnet sein.

Mit anderen Worten zeigt Fig. 1 einen Kaltgasgenerator 100 mit einer Berstscheibe 108 der als Bestandteil einer Aktuatorik für die passive Sicherheit von Insassen eines Fahrzeugs bei einem Aufprall verwendet werden kann.

Kaltgasgeneratoren können mit herkömmlichen Zündpillen zum Öffnen der Gasdruckbehälter ausgestattet sein. Dabei sind mehrere Funktionsweisen zum Öffnen des Druckbehälters möglich. Beispielsweise kann eine Druckwelle erzeugt werden, die von einem Ende des Behälters zum anderen Ende läuft und dort eine Membrane zerstört. Ebenso kann die Zündpille Hitze erzeugen, die eine Membrane zerstört. Die Zündpille kann auch einen Dorn beschleunigen, der eine Membrane zerstört. Oder eine Zündpille bewegt einen Hebel, der eine Membrane abstützt, sodass die Membrane versagt.

Durch den hier vorgestellten Ansatz ist es möglich, mit möglichst wenig Sprengstoff 110 eine gasdichte Membrane 108 zu zerstören. Dadurch kann ein einfacheres Handling der Druckbehälter 102 erreicht werden, da nur geringe Mengen von Sprengstoff 110 zum Zerstören der Membrane 108 nötig sind. Die geringen Mengen gefährlicher Stoffe stellen ein geringeres Unfallrisiko dar. Um die größte Wirkung der Sprengladung 110 zu erreichen, ist der Sprengstoff 110 in direktem Kontakt mit der Membrane 108 angeordnet.

Fig. 2 zeigt ein Ablaufdiagramm eines Verfahrens 200 zum Herstellen eines Kaltgasgenerators gemäß einem Ausführungsbeispiel der vorliegenden Erfindung. Das Verfahren 200 weist einen Schritt 202 des Befüllens und einen Schritt 204 des Verschließens auf. Durch das Verfahren kann ein Kaltgasgenerator, wie er in Fig. 1 dargestellt ist hergestellt werden. Im Schritt 202 wird ein Gasdruckbehälter mit einem komprimierten Kaltgas gefüllt. Im Schritt 204 wird eine Austrittsöffnung des Gasdruckbehälters mit einer Vorrichtung zum Öffnen, wie sie hier vorgestellt wird, gasdicht verschlossen.

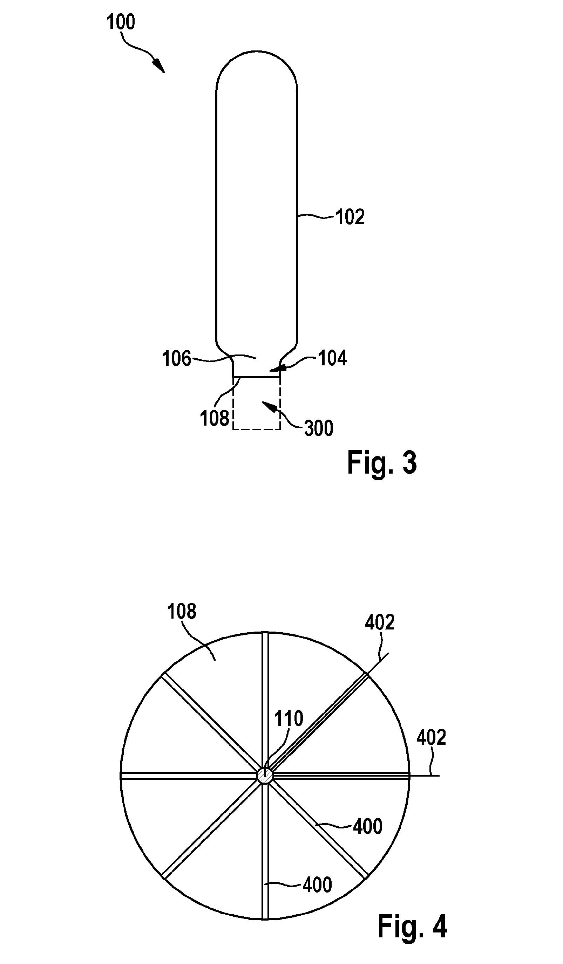

Fig. 3 zeigt eine Darstellung eines Kaltgasgenerators 100 gemäß einem Ausführungsbeispiel der vorliegenden Erfindung. Der Kaltgasgenerator 100 weist wie in Fig. 1 einen Gasdruckbehälter 102 und eine Vorrichtung 104 zum Öffnen gemäß dem hier vorgestellten Ansatz auf. Der Gasdruckbehälter oder Tank 102 weist einen zylindrischen Grundkörper mit gewölbtem Boden und Schulter auf. Hier ist der Gasdruckbehälter 102 mit unten angeordneter Schulter dargestellt. Im Bereich der Schulter weist der Gasdruckbehälter 102 eine Ausströmöffnung 106 auf. Der Gasdruckbehälter 102 ist in diesem Ausführungsbeispiel dazu ausgebildet, mit einem Prallsack oder Airbag verbunden zu werden. Die Ausströmöffnung 106 ist von der Vorrichtung 104 verschlossen. Der Gasdruckbehälter ist mit einem Kaltgas unter einem hohen Druck gefüllt. Die Berstscheibe 108 ist aufgrund des Drucks in dem Gasdruckbehälter 102 nach außen gewölbt. Die Vorrichtung 104 verhindert in geschlossenem Zustand, dass das Kaltgas durch einen an die Ausströmöffnung 106 angrenzenden Austritt 300 zum Airbag strömt.

Mit anderen Worten zeigt Fig. 3 eine schematische Darstellung von Tank 102, Berstscheibe 108 und Austrittsöffnung 300, die den Austritt zum Airbag repräsentiert.

Fig. 4 zeigt eine Darstellung einer Vorrichtung 104 zum Öffnen eines Gasdruckbehälters gemäß einem Ausführungsbeispiel der vorliegenden Erfindung. Die Vorrichtung 104 weist eine Berstscheibe 108 und eine Sprengladung 110 auf. Die Berstscheibe 108 ist rund und weist zwei oder mehrere, sich regelmäßig sternförmig kreuzende Nuten 400 auf. Im Bereich der Nuten 400 ist eine Materialstärke der Berstscheibe 108 reduziert. Damit sind die Nuten 400 Sollbruchstellen für die Berstscheibe 108. An einem Kreuzungspunkt der Nuten 400, in der Mitte der Berstscheibe 108 ist die Sprengladung 110 angeordnet. Die Sprengladung 110 ist unmittelbar auf einer Oberfläche der Berstscheibe 108, in einer an dem Kreuzungspunkt resultierenden Vertiefung in der Berstscheibe 108 angeordnet. Die Sprengladung 110 ist sehr klein gegenüber der Berstscheibe 108. Die Sprengladung 110 ist an einer Schwachstelle der Berstscheibe 108 angeordnet. Zwei elektrische Leitungen 402 zu der Sprengladung 110 sind in zwei benachbarten Nuten 400 oder durch einen Abstandshalter geführt angeordnet. Die elektrischen Leitungen 402 sind über einen Zünder für die Sprengladung 110 verbunden. Der Zünder ist in der Sprengladung 110 integriert.

Mit andern Worten zeigt Fig. 4 eine schematische Darstellung der Berstscheibe 108 mit den Prägungen 400, der elektrischen Zuleitung 402 und der Sprengladung 110 aus Sprengstoff. Die Prägungen 400 sind Vertiefungen in der Berstscheibe 108.

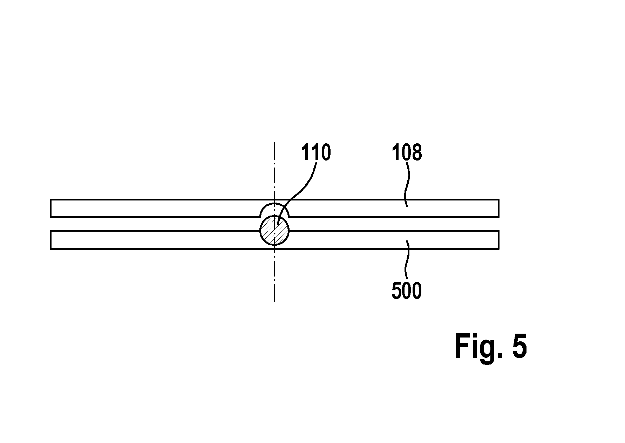

Fig. 5 zeigt eine Darstellung einer Vorrichtung 104 mit zwei Berstscheiben 108, 500 gemäß einem Ausführungsbeispiel der vorliegenden Erfindung. Die Vorrichtung kann beispielsweise der Vorrichtung in Fig. 1 entsprechen. Zusätzlich zu der Vorrichtung in Fig. 1 weist die hier dargestellte Vorrichtung 104 eine zweite Berstscheibe 500 auf. Die Berstscheibe 108 und die zweite Berstscheibe 500 sind deckungsgleich übereinander angeordnet. Zwischen beiden Berstscheiben 108, 500 ist ein geringer Luftspalt angeordnet. Die zweite Berstscheibe 500 ist an dem Luftspalt gespiegelt zu der Berstscheibe 108 ausgeführt. Im Zentrum der kreisförmigen Berstscheiben 108, 500, auf der, jeweils der anderen Berstscheibe 108, 500 zugewandten Seite, ist je eine Vertiefung angeordnet, sodass dort ein Hohlraum zwischen den Berstscheiben 108, 500 ausgebildet ist. In dem Hohlraum durch die Nuten oder dem Abstandshalter ist die Sprengladung 110 angeordnet. Die Sprengladung 110 ist an der zweiten Berstscheibe 500 befestigt und wird von der zweiten Berstscheibe 500 an die Berstscheibe 108 gepresst, sodass die Sprengladung 110 unmittelbar an der Oberfläche der Berstscheibe 108 angeordnet ist. Die Vertiefung in der zweiten Berstscheibe 500 dient damit als Aufnahme für die Sprengladung 110. Wenn die Berstscheiben 108, 500, wie in dem Ausführungsbeispiel in Fig. 4 dargestellt, Nuten aufweisen, dann sind die Nuten ebenfalls deckungsgleich angeordnet, um einen Bruch beider Berstscheiben 108, 500 entlang der nuten zu gewährleisten, wenn die Sprengladung 110 gezündet wird.

Mit andern Worten zeigt Fig. 5 eine schematische Darstellung der Berstscheiben 108, 500 im Verbund. Dabei ist der Sprengstoff 110 zwischen der ersten Berstscheibe 108, und der zweiten Berstscheibe 500 angeordnet.

Im Folgenden werden die Figuren 3, 4 und 5 mit anderen Worten beschrieben. Zwischen einem Druckbehälter 102 (Tank) und einer Austrittsöffnung 200 zum Airbag wird eine Berstscheibe 108 angebracht (Fig. 3). Die Austrittsöffnung 300 zum Airbag kann direkt freigegeben werden oder durch ein zwischengeschaltetes Ventil geöffnet oder gesperrt werden. Damit können adaptive Airbags realisiert werden. Die Berstscheibe 108 hat Prägungen 400 (Nuten), die als Vorgabe für spätere Bruchlinien der Berstscheibe 108 dienen. In der Mitte der Scheibe 108 laufen alle Vertiefungen 400 zusammen (Fig. 4). Hier wird die Sprengladung 110 platziert. Damit sie elektrisch gezündet werden kann, wird die elektrische Zuführung 402 in den Vertiefungen 400 der Membrane 108 bis zur Mitte geführt. Es können zwei identische Berstscheiben im Verbund verbaut werden (Fig. 5). Die erste Berstscheibe 108 wird mit dem Boden des Druckbehälters 102 verschlossen (z. B. laserverschweißt) und die zweite Berstscheibe 500 wird gespiegelt mit der Ersten 108 zusammengebaut (z. B. verschraubt mit dem Teil, das die Austrittsöffnungen und das Ventil enthält). Die zweite Berstscheibe 500 kann den Sprengstoff 110 enthalten. Dadurch entsteht keine Beanspruchung des Sprengmittels 110 durch Schweißvorgänge. Damit befindet sich das Sprengmittel 110 zwischen den beiden Berstscheiben 108, 500 und kann sich nicht durch Temperaturwechsel vom Material lösen, da es eingeklemmt ist. Die Wirkung des Sprengmittels 110 ist jetzt optimal, da es direkt an der schwächsten Stelle der Berstscheibe 108 positioniert ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

## Patentansprüche

1. Vorrichtung (104) zum Öffnen eines Gasdruckbehälters (102), wobei die Vorrichtung (104) die folgenden Merkmale aufweist:
eine Berstscheibe (108) zum gasdichten Verschließen des Gasdruckbehälters (102); und
eine Sprengladung (110) zum Zerstören der Berstscheibe (108), ansprechend auf einen Zündimpuls, wobei die Sprengladung (110) in direktem Kontakt zu einer Oberfläche der Berstscheibe (108) angeordnet ist.

2. Vorrichtung (104) gemäß Anspruch 1, bei der die Sprengladung (110) an einer Schwachstelle der Berstscheibe (108) angeordnet ist.

3. Vorrichtung (104) gemäß einem der vorangegangenen Ansprüche, bei der die Berstscheibe (108) zumindest eine Nut (400) aufweist, wobei die Nut (400) als Sollbruchstelle der Berstscheibe (108) ausgebildet ist.

4. Vorrichtung (104) gemäß einem der vorangegangenen Ansprüche, mit einer zweiten Berstscheibe (500), die so angeordnet ist, dass die Sprengladung (110) zwischen der Berstscheibe (108) und der zweiten Berstscheibe (500) angeordnet ist.

5. Vorrichtung (104) gemäß Anspruch 4, bei der die zweite Berstscheibe (500) eine Aufnahme für die Sprengladung (110) aufweist.

6. Vorrichtung (104) gemäß einem der Ansprüche 4 bis 5, bei der die Berstscheibe (108) und die zweite Berstscheibe (500) Nuten (400) aufweisen, wobei die Nuten (400) zueinander ausgerichtet sind, insbesondere wobei die elektrischen Leiterbahnen (402) in zumindest einer der Nuten (400) angeordnet sind.

7. Vorrichtung (104) gemäß einem der Ansprüche 4 bis 6, bei der die zweite Berstscheibe (500) gegenüber der Berstscheibe (108) vorgespannt ist, um die Sprengladung (110) zwischen der Berstscheibe (108) und der zweiten Berstscheibe (500) einzuklemmen.

8. Kaltgasgenerator (100) mit folgenden Merkmalen:
einem Gasdruckbehälter (102), der in einem betriebsbereiten Zustand mit einem komprimierten Kaltgas gefüllt ist; und
einer Vorrichtung (104) zum Öffnen des Gasdruckbehälters (102) gemäß einem der Ansprüche 1 bis 7, wobei die Berstscheibe (108) in dem betriebsbereiten Zustand eine Austrittsöffnung (106) des Gasdruckbehälters (102) gasdicht verschließt.

9. Kaltgasgenerator (100) gemäß Anspruch 8, mit einem regelbaren Ventil zum Regeln eines Gasstroms durch die Ausströmöffnung (106) während einer Aktivierung des Kaltgasgenerators (100).

10. Kaltgasgenerator (100) gemäß einem der Ansprüche 8 bis 9, bei dem die Berstscheibe (108) mit dem Gasdruckbehälter (102) verschweißt ist.

11. Verfahren (200) zum Herstellen eines Kaltgasgenerators (100), wobei das Verfahren (200) die folgenden Schritte aufweist:
Befüllen (202) eines Gasdruckbehälters (102) mit einem komprimierten Kaltgas; und
Verschließen (204) einer Austrittsöffnung (106) des Gasdruckbehälters (102) mit einer Vorrichtung (104) zum Öffnen gemäß einem der Ansprüche 1 bis 7.
